# EUROPEAN PATENT APPLICATION

(11) **EP 4 494 945 A1**
(43) Date of publication of application: **22.01.2025**
(21) Application number: 23213192.0
(22) Date of filing: 30.11.2023
(51) Int. Cl.: B60R 1/00

(54) **SCALABLE IN-VEHICLE VIDEO SYSTEM AND SIGNAL CONTROL APPARATUS**

(30) Priority: 18.07.2023 US 202363527509 P
(71) Applicant: Getac Technology Corporation, New Taipei City 221009 (TW)
(72) Inventor: HUANG, Cheng-Liang, 11568 Taipei City (TW); HUNG, Yung-Le, 11568 Taipei City (TW)
(74) Representative: Viering, Jentschura & Partner mbB Patent- und Rechtsanwälte

(57) **Abstract**

A scalable in-vehicle video system and a signal control apparatus (300) are provided. The signal control apparatus (300) of the scalable in-vehicle video system can be a standalone device that is used to connect with various peripheral devices for transmitting signals. The signal control apparatus (300) can implement an audiovisual hub device, and can be disposed in a vehicle. The signal control apparatus (300) includes a control unit (301), multiple interfaces (304a, 304b, 304c), at least one communication port (305), and multiple wireless or wired connection ports (306a, 306b). The signal control apparatus (300) connects with a sensor and an external circuit (313) via the multiple interfaces (304a, 304b, 304c), connects with an external system (317) via the communication port (305), and connects with multiple video recorders (315, 316) via the connection ports (306a, 306b). Audiovisual files generated by the video recorders (315, 316) can be stored to a memory module of the signal control apparatus (300), or can be transmitted to the external system (317) through the signal control apparatus (300).

## Description

### FIELD OF THE DISCLOSURE

The present invention relates to a separable signal control apparatus, and more particularly to a scalable signal control apparatus providing various types of connection interfaces and a scalable in-vehicle video system implemented by applying the signal control apparatus.

### BACKGROUND OF THE DISCLOSURE

An in-vehicle video recorder includes an in-vehicle camera, a storage device, an audio receiver, a positioning system, a control device, a communication module, and various sensors. The in-vehicle camera can be installed on a dashboard, a windshield, or a rear mirror of a car. The storage device is used to store audiovisual contents. The audio receiver can be a microphone in the car or an external wireless microphone. The positioning system can be, for example, a global positioning system (GPS), so that all the audiovisual contents recorded by various audiovisual devices can have coordinates. The control device is used to control the various audiovisual devices connected with the in-vehicle video recorder to start or stop recording video, and annotate various video clips with tags. The communication module is used to transmit the audiovisual contents to other systems.

A conventional in-vehicle audiovisual system is capable of processing audiovisual data. A processor of the in-vehicle audiovisual system is able to process the audio and the video received from peripheral devices, and then store the audio and the video to the storage device inside the in-vehicle audiovisual system. However, due to restriction of capability of the processor and flow constraints of input/output ports, the quantity of peripheral video recorders supported by the in-vehicle audiovisual system is limited, and the quality and resolution of the audiovisual content are also limited. The conventional in-vehicle audiovisual system may also encounter the problem of video and audio synchronization in the process of video and audio processing. Furthermore, since the in-vehicle audiovisual system integrates a communication function that uses a network connection or a mobile communication protocol to connect with a remote system (such as a control center), the load on the processor for processing data transmission of the in-vehicle audiovisual system will be increased.

When the in-vehicle audiovisual system integrates the audio and video processing and the communication function, high power consumption is incurred, such that larger and more stable power is required, and a heat dissipation problem may occur. Therefore, how to overcome the above-mentioned problems has become one of the important issues to be solved in the related art.

### SUMMARY OF THE DISCLOSURE

In response to the above-referenced technical inadequacies of a conventional in-vehicle audiovisual system (for example, the quantity of supported video recorders, the real-time video processing function, and the scalability of the in-vehicle audiovisual system being limited by audio and video processing capabilities), the present invention provides a scalable in-vehicle video system and a signal control apparatus. The scalable in-vehicle video system adopts a separable design that separates the video processing function, the signal integration function, and the connection function. Accordingly, the signal control apparatus does not process audiovisual data, and the quantity of the supported video recorders will not be limited by the limited audio and video processing capabilities, thereby improving the scalability of the in-vehicle video system.

In one of the embodiments, the signal control apparatus includes a control unit, a memory module, multiple interfaces, at least one communication port, and a plurality of connection ports. The interfaces are used to connect with one or more built-in sensors and receive sensing signals generated by the one or more sensors. The interfaces are also used to connect with an external circuit for receiving signals generated by the external circuit. The communication port is used to connect with an external communication system for communicating with an external system. The plurality of wireless or wired connection ports can be used to connect with multiple video recorders that generate audiovisual files received by the signal control apparatus. These audiovisual files are stored in a memory module or transmitted to the external system.

In an aspect of the present invention, the signal control apparatus is used to implement a hub device having multiple interfaces. The hub device can receive and transmit signals generated by one or more built-in sensors, one or more external circuits, an external system, and a plurality of video recorders.

Further, the signal control apparatus can be installed in a vehicle, and the multiple video recorders connected with the signal control apparatus can be an in-vehicle multi-view camera, a webcam, and/or multiple body-worn video recorders.

In another aspect of the present invention, the hub device implemented by the signal control apparatus can further embody an audiovisual hub device that can be used to receive audiovisual contents generated by the multiple video recorders. The hub device broadcasts the signals received by the one or more built-in sensors or the one or more external circuits to the video recorders via the connection ports.

Still further, the signal control apparatus can remotely trigger the video recorder to activate a video recording function.

In one aspect, the signal control apparatus includes a control panel, and a user is allowed to operate the control panel for remotely controlling any of the multiple video recorders to start or to stop recording the audiovisual content, and for previewing the audiovisual content.

The communication system, the plurality of video recorders, and the signal control apparatus mentioned above are capable of achieving a separable and scalable in-vehicle video system.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
Fig. 1 is a schematic diagram illustrating a signal control apparatus according to one embodiment of the present invention;
Fig. 2 is a schematic diagram illustrating an in-vehicle signal control apparatus according to one embodiment of the present invention;
Fig. 3 is a schematic diagram illustrating a framework of the signal control apparatus according to one embodiment of the present invention; and
Fig. 4 is a schematic diagram illustrating various interfaces of the signal control apparatus according to one embodiment of the present invention.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention relates to a scalable in-vehicle video system and a signal control apparatus. According to one embodiment of the present invention, the scalable in-vehicle video system can be implemented in a vehicle or a moving device driven by a law enforcement officer. The framework of the scalable in-vehicle video system is to separate video recording and audiovisual signal processing functionalities from the signal control apparatus that integrates various interfaces, communication ports, and connection ports. The signal control apparatus embodies a hub device having multiple interfaces that is capable of receiving signals generated by an external device and signals generated by sensors built in the signal control apparatus. In addition to implementing a comprehensive and scalable in-vehicle video system, a distribution framework can be implemented since the signal control apparatus is configured to connect with various IoT devices. While each component of the in-vehicle video system can operate independently, the components can also connect with and share data with each other for other integrated applications.

The signal control apparatus does not provide audio and video processing functions that require a large amount of computing power, but adopts a separable design from a part that is conventionally used to process audiovisual data. As such, in the function of connecting with an external device, the signal control apparatus will not be restricted by the demand for additionally processing the audiovisual data since the signal control apparatus does not need to process audio and video synchronization individually. Therefore, the signal control apparatus has scalability. Further, power consumption and a heat dissipation problem of the apparatus can be improved. Still further, the signal control apparatus can adopt a low-power-consumption and low-performance processor.

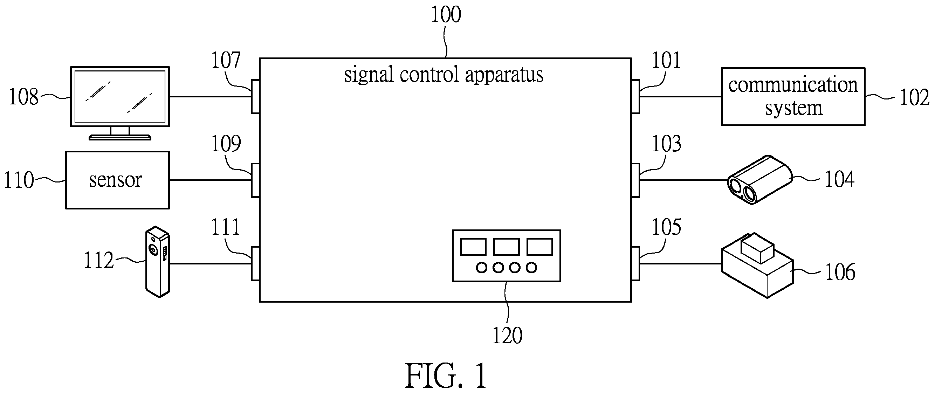

Fig. 1 is a schematic diagram illustrating a signal control apparatus according to one embodiment of the present invention.

The basic design of a signal control apparatus 100 is configured to include multiple interfaces for transmitting signals. The interfaces electrically connect with a control unit of the apparatus. The interface is, for example, an audiovisual interface 107 that is used to connect with a monitor 108 or a computer. The personnel can use the monitor 108 or the computer to check operating statuses of the signal control apparatus 100 and various peripheral devices, and to monitor signals generated by various sensors and audiovisual contents generated by video recorders. The multiple interfaces include a first interface 109 used to connect with one or more sensors 110 and a second interface 111 used to connect with a video recorder 112.

The signal control apparatus 100 includes at least one communication port 101 that is used to connect with a communication system 102. The communication system 102 refers to various network devices, such as a router, a switch, and a base station. The signal control apparatus 100 transmits the received signals to an external system through the communication system 102.

The signal control apparatus 100 includes multiple wireless or wired connection ports that are used to connect with various video recorders and receive audiovisual files generated by the video recorders. The audiovisual files are stored in a memory module or transmitted to the external system. For example, a first connection port 103 of the signal control apparatus 100 is used to connect with the various video recorders (such as a body-worn video recorder or a drive recorder 104), and a second connection port 105 connects with an audiovisual hub device 106 that is used to collect the data generated by the various video recorders.

The signal control apparatus 100 can include a control panel 120 that allows a user to manipulate the various devices connected thereto. Further, one of the functions provided by the control panel 120 is to annotate tags or contents on the received videos or clips, such as annotating a tag of an important item on an important event, annotating a tag of a specific personnel on a record of an event relating to behavior of said specific personnel, and annotating a tag on an interested clip in an audiovisual content. These tags can be used for searching a specific event in the future.

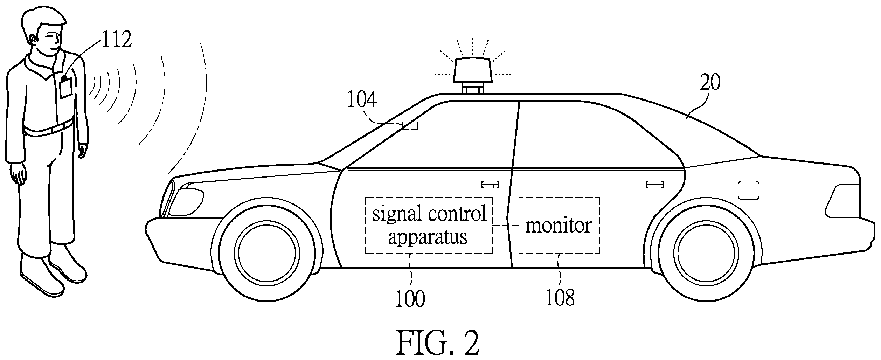

Fig. 2 is a schematic diagram illustrating a signal control apparatus operated in a vehicle according to one embodiment of the present invention.

The signal control apparatus 100 shown in Fig. 2 is installed in a vehicle 20. The signal control apparatus 100 connects with a monitor 108 or a computer via one of multiple interfaces. The monitor 108 or the computer provides for a person in the vehicle 20 to monitor operating statuses of various devices connected with the signal control apparatus 100. The operating statuses of the device include a battery capacity, a status of audiovisual contents to be transmitted, and a status of connection and operation of the device. In an exemplary example, the monitor 108 can be used to monitor images transmitted from the video recorders worn by multiple persons at the same time and clearly monitor the images at various angles. The monitor 108 or the computer allows the person in the vehicle 20 to be aware of an overall situation and keep track of the status of the person who performs a task.

The signal control apparatus 100 connects with a drive recorder 104 in the vehicle 20 for obtaining the audiovisual contents recorded by the drive recorder 104. According to one embodiment of the present invention, the drive recorder 104 adopts a multi-angle photographing module that can include a front camera module, a rear camera module, and an in-vehicle camera module. The drive recorder 104 can include a memory that can store images and audio data by itself. In one further embodiment of the present invention, the data generated by the drive recorder 104 can be synchronized with the time at which the content is generated and stored in the signal control apparatus 100.

The present example shows that the signal control apparatus 100 connects with a video recorder 112 outside the vehicle 20 via a wireless connection. The signal control apparatus 100 can connect with multiple ones of the video recorder 112, and the video recorder 112 can be an in-vehicle multi-view camera, a webcam, and/or multiple body-worn video recorders. The video recorder 112 can transmit a real-time audiovisual content to the signal control apparatus 100 in a streaming manner.

Further, a pre-buffer function is provided in an operating process of the front camera module, the rear camera module, the in-vehicle camera module, and the video recorder 112 worn by a person. The pre-buffer function is provided for buffering the recorded audiovisual data in a buffer before a video recording function is activated. When an event occurs, apart from activating the video recorder 122 to start recording a video, the buffer has already buffered certain contents for a period of time (e.g., 30 seconds) before the occurrence of the event.

Afterwards, the pre-buffered content can be combined with the content generated when the video recorder 122 is activated to start recording the video. The combined content can be stored to a storage device. In this way, the whole event that includes a cause and a process can be recorded.

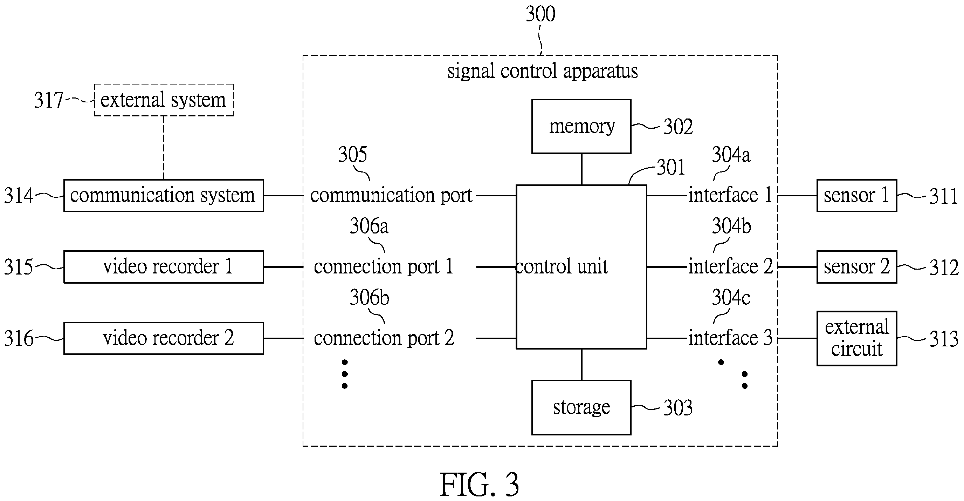

Fig. 3 is a schematic diagram depicting a framework of the signal control apparatus according to one embodiment of the present invention. The diagram shows main circuit components of a signal control apparatus 300 and a connection configuration between an external device and the signal control apparatus 300.

The signal control apparatus 300 includes a control unit 301 that is electrically connected with a built-in memory module, e.g., a memory 302 and a storage 303. A security approach can be applied to the signal control apparatus 300 for preventing unauthorized persons from accessing the signal control apparatus 300.

The signal control apparatus 300 provides various interfaces, which include input/output interfaces that are used to receive signals generated by external devices (as shown in the diagram). The input/output interfaces include a first interface 304a used to connect with a first sensor 311, a second interface 304b used to connect with a second sensor 312, and a third interface 304c connected with an external circuit 313. According to one embodiment of the present invention, the first sensor 311 and the second sensor 312 represent the sensors disposed at various positions. Taking the vehicle as an example, the sensors can be disposed at many positions in the vehicle for sensing various conditions inside and outside the vehicle. In the case of collision or emergency braking, the in-vehicle video recorder can be instantly activated to start recording the event.

The signal control apparatus 300 includes at least one communication port, such as a communication port 305. The communication port 305 can be a network communication port that allows the signal control apparatus 300 to connect with a communication system 314. The signal control apparatus 300 can connect with an external system 317 through the communication system 314.

Taking the in-vehicle signal control apparatus 300 as an example, the external system 317 can be a vehicle control center. For the law enforcement officer, the external system 317 can be a control center. The communication port 305 is, for example, an interface for mobile communication. The communication system 314 can be a mobile station provided by a mobile communication service provider. The external system 317 can be used to implement remote control, which includes remotely configuring the apparatus, updating firmware and software of the apparatus, or performing system diagnosis. Further, the external system 317 can receive the data transmitted from the signal control apparatus 300 by a mobile communication protocol.

The signal control apparatus 300 includes multiple wireless or wired connection ports, such as a first connection port 306a and a second connection port 306b that respectively connect with a first video recorder 315 and a second video recorder 316. The audiovisual data respectively generated by the first video recorder 315 and the second video recorder 316 can be transmitted to the signal control apparatus 300 via the first connection port 306a and the second connection port 306b in a form of an electronic file. The audiovisual data is stored to a memory module of the signal control apparatus 300. For example, the audiovisual data can be temporarily stored in the memory 302. After format conversion or a compression process, the audiovisual data can be stored to the storage 303, or can be transmitted to the external system 317 through the communication system 314 via the communication port 305.

It should be noted that the present invention provides a separation-type system. For example, the above-described communication system 314 of Fig. 3 provides a network connection for connecting with the external system 317 in charge of data transmission. The multiple video recorders (e.g., the first video recorder 315 and the second video recorder 316) can be worn by multiple persons for recording videos with different viewing angles at different locations. The signal control apparatus 300 is able to connect to both of the communication system 314 and the multiple video recorders. When the separation-type system is in operation, the signal control apparatus 300 can transmit the contents generated by the multiple video recorders to the external system 317 through the communication system 314. Therefore, a scalable in-vehicle video system can be implemented. In particular, the signal control apparatus 300 does not process the audiovisual data nor deal with the issue of audio and video synchronization.

According to the above embodiments of the present invention, the design of the signal control apparatus allows the scalable in-vehicle video system to separately operate the communication system that is in charge of network communication, the multiple video recorders (e.g., the body-worn cameras) that are in charge of video recording and pre-processing, and the signal control apparatus that provides various interfaces and performs data integration and transmission. It should be noted that the implementation of the scalable in-vehicle video system is particularly based on the audiovisual hub device implemented by the signal control apparatus having the interfaces.

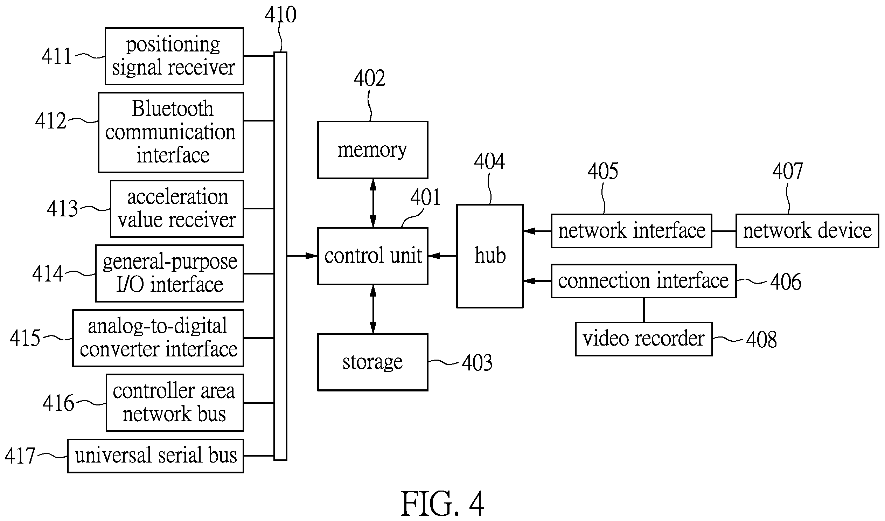

Reference is made to Fig. 4, which is a schematic diagram illustrating many types of interfaces of the signal control apparatus according to one embodiment of the present invention.

The diagram provides an embodiment that illustrates the relationship between the built-in circuit components and the various interfaces of the signal control apparatus. The main core components of the signal control apparatus are, for example, a control unit 401, a memory 402, and a storage 403. The control unit 401 connects with a hub 404, and the hub 404 provides a network interface 405 for connecting with a network device 407 (such as a network router, a switch, or a base station), and provides a connection interface 406 for connecting with various video recorders 408.

Further, in the diagram, the control unit 401 provides various interfaces via a bus 410, so as to implement a hub device having the multiple interfaces. The hub device is able to receive and transmit the data generated by one or more built-in sensors, and receive and transmit the data generated by one or more external circuits, an external system, and the multiple video recorders. The hub device also includes a positioning signal receiver 411 such as a GPS (global positioning system) receiver, a BLUETOOTH communication interface 412 such as a BLE (BLUETOOTH low energy) interface, an acceleration value receiver 413, a general-purpose I/O interface (GPIO) 414, an analog-to-digital converter (ADC) interface 415, a controller area network (CAN) bus 416, and a universal serial bus (USB) 417. An actual implementation of the hub device includes one or more of the abovementioned components.

The signal control apparatus is capable of receiving signals via various interfaces. For example, the signals generated by sensors include positioning signals and accelerometer sensing signals. The signal control apparatus receives signals generated by various devices in a vehicle via a signal terminal, e.g., GPIO. The signals generated by the devices in the vehicle are, for example, signals generated by police equipment and transmitted via I/O of the vehicle.

According to the above embodiments of the present invention, the hub device having the multiple interfaces implemented by the signal control apparatus can further embody an audiovisual hub device. The audiovisual hub device is used to receive and transmit the audiovisual contents generated by the multiple video recorders. The hub device is also used to broadcast the signals received from one or more built-in sensors or one or more external circuits via multiple wireless or wired connection ports. Accordingly, events sensed by the sensors connected with the signal control apparatus (such as images captured by a camera module in the video recorder) can be recorded and stored in the signal control apparatus, and then broadcasted to the other devices and the external system (e.g., a vehicle control center).

The signal control apparatus also interconnects various data, such that different devices and sensors can collaborate with each other through the audiovisual hub device. For example, when the sensor transmits the sensing signals via some interfaces such as the positioning signal receiver 411 and the acceleration value receiver 413, and the control unit 401 determines that the sensing signals reach a triggering threshold, the signal control apparatus generates a signal to trigger one of the video recorders 408 to activate a function of video recording. The signal control apparatus receives the audiovisual contents generated by one or more of the video recorders 408, and then transmits the audiovisual contents to the external system through the network device 407 via the network interface 405 in a streaming manner.

In an exemplary example, the video recorders 408 can be worn by persons. When the video recorder 408 is in operation, a user can manipulate a control panel (e.g., the control panel 120 of the signal control apparatus 100 of Fig. 1) of the signal control apparatus for controlling or remotely controlling any of the video recorders 408 to start or stop recording videos, and for previewing the recorded videos.

Further, the signal control apparatus provides circuit-protection measures, such as an overvoltage protection and an overload protection. In the overvoltage protection, the apparatus is prevented from permanent damage due to voltage surges by suppressing high voltages when the apparatus is in operation. In the overload protection, the apparatus is prevented from permanent damage due to an overcurrent by suppressing currents when the apparatus is in an abnormal operation.

Furthermore, since the signal control apparatus can be installed in a moving device such as a vehicle, a current spike may occur when the vehicle is actuated. Therefore, the current-protection measure needs to process the current spike for preventing the signal control apparatus from damage. The circuit-protection measure also provides a transient suppression mechanism that is used to suppress electromagnetic interference (EMI) or an instantaneous voltage fluctuation caused by various reasons for protecting sensitive components from damages. Further, the circuit-protection measure can protect the apparatus from damage caused by reverse polarity that occurs when the apparatus is accidentally connected to positive and negative terminals of a power supply in reverse.

Based on the above-mentioned circuit-protection measures, the control unit (e.g., a microcontroller unit, MCU) of the signal control apparatus is required to continuously detect the voltage of an on-board power after the apparatus is activated, so as to ensure that the apparatus can operate properly. When the on-board power drops and meets a lower-power threshold, the control unit can enable an automatic shut-down procedure to avoid the problem caused by insufficient power.

In conclusion, according to the above embodiments of the signal control apparatus and the scalable in-vehicle video system that is implemented by the signal control apparatus, one of the main objectives is to allow the signal control apparatus and the quantity of its peripheral audiovisual devices to be not limited by the capacity of the processor through separating the audio and video processing function and the signal integration and connection function. Accordingly, the scalability of the in-vehicle video system can be improved, and the in-vehicle video system can operate in a normal manner by independent protection measures. Based on the separable design of the in-vehicle video system, the various video recorders connected with the signal control apparatus can independently operate, and the signal control apparatus provides the various interfaces for embodying an audiovisual hub device without needing to process audio and video synchronization. The in-vehicle video system allows various peripheral devices to perform functions of real-time monitoring, network transmission, and power supply.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A signal control apparatus (300), **characterized in that** the apparatus comprises:
a control unit (301) connected with a built-in memory module;
multiple interfaces (304a, 304b, 304c) electrically connected with the control unit (301), wherein the interfaces (304a, 304b, 304c) connect with one or more built-in sensors (311, 312) for generating sensing signals, and connect with one or more external circuits (313) for receiving signals generated by the one or more external circuits (313);
at least one communication port (305) electrically connected with the control unit (301), wherein the at least one communication port (305) is used to connect with a communication system (314) that connects with an external system (317) via a network; and
multiple wireless or wired connection ports (306a, 306b) connected with multiple video recorders (315, 316) for receiving audiovisual files generated by the multiple video recorders (315, 316), wherein the audiovisual files are stored to the built-in memory module or transmitted to the external system (317).

2. The signal control apparatus (300) according to claim 1, wherein the multiple interfaces (304a, 304b, 304c) include any combination of a positioning signal receiver (411), a BLUETOOTH communication interface (412), an acceleration value receiver (413), a general-purpose I/O interface (414), an analog-to-digital converter interface (415), a controller area network bus (416), and a universal serial bus (417).

3. The signal control apparatus (300) according to claim 1, wherein the signal control apparatus (300) is used to implement a hub device having multiple interfaces (304a, 304b, 304c), and the hub device is capable of receiving and transmitting signals generated by the one or more built-in sensors (311, 312), the one or more external circuits (313), the external system (317), and the video recorders (315, 316).

4. The signal control apparatus (300) according to claim 3, wherein the signal control apparatus (300) is installed in a vehicle, and the multiple video recorders (315, 316) include an in-vehicle multi-view camera, a webcam, and/or multiple body-worn video recorders (315, 316).

5. The signal control apparatus (300) according to claim 3, wherein the hub device having the multiple interfaces (304a, 304b, 304c) implemented by the signal control apparatus (300) further embodies an audiovisual hub device that is used to receive audiovisual contents generated by the multiple video recorders (315, 316); wherein the hub device broadcasts the signals generated by the one or more built-in sensors (311, 312) or the one or more external circuits (313) to the video recorders (315, 316) via the multiple wireless or wired connection ports (306a, 306b).

6. The signal control apparatus (300) according to claim 5, wherein the multiple video recorders (315, 316) are triggered by the signal transmitted by the signal control apparatus (300) to activate a video recording function.

7. The signal control apparatus (300) according to claim 5, wherein the audiovisual hub device implemented by the signal control apparatus (300) connects with a network router through the at least one communication port (305), so as to transmit the audiovisual contents generated by the multiple video recorders (315, 316) to the external system (317) in a live streaming process.

8. The signal control apparatus (300) according to any of claim 1 to claim 7, further comprising a control panel (120), wherein a user is allowed to operate the control panel (120) for remotely controlling any of the multiple video recorders (315, 316) to start or to stop recording the audiovisual content, and for previewing the audiovisual content.

9. A scalable in-vehicle video system, **characterized in that** the system comprises:
a communication system (314) providing a network connection to connect with an external system (317);
multiple video recorders (315, 316) including an in-vehicle multi-view camera, a webcam, and/or multiple body-worn video recorders (315, 316) for recording audiovisual contents at different locations and with different viewing angles; and
a signal control apparatus (300), which includes:
a control unit (301) connected with a built-in memory module;
multiple interfaces (304a, 304b, 304c), electrically connected with the control unit (301), wherein the interfaces (304a, 304b, 304c) connect with one or more built-in sensors (311, 312) for generating sensing signals, and connect with one or more external circuits (313) for receiving signals generated by the one or more external circuits (313);
at least one communication port (305), electrically connected with the control unit (301), wherein the at least one communication port (305) is used to connect with the communication system (314) that connects with the external system (317) via a network; and
multiple wireless or wired connection ports (306a, 306b) connected with multiple video recorders (315, 316) for receiving audiovisual files generated by the multiple video recorders (315, 316), wherein the audiovisual files are stored to the built-in memory module or transmitted to the external system (317).

10. The scalable in-vehicle video system according to claim 9, wherein the multiple interfaces (304a, 304b, 304c) of the signal control apparatus (300) include any combination of a positioning signal receiver (411), a BLUETOOTH communication interface (412), an acceleration value receiver (413), a general-purpose I/O interface (414), an analog-to-digital converter interface (415), a controller area network bus (416), and a universal serial bus (417).

11. The scalable in-vehicle video system according to claim 9, wherein the signal control apparatus (300) implements a hub device having the multiple interfaces (304a, 304b, 304c) for receiving the audiovisual contents generated by the multiple video recorders (315, 316); wherein the hub device broadcasts the signals generated by the one or more built-in sensors (311, 312) or the one or more external circuits (313) to the video recorders (315, 316) via the multiple wireless or wired connection ports (306a, 306b).

12. The scalable in-vehicle video system according to claim 11, wherein the multiple video recorders (315, 316) are triggered by the signal transmitted by the signal control apparatus (300) to activate a video recording function.

13. The scalable in-vehicle video system according to claim 11, wherein the hub device having the multiple interfaces (304a, 304b, 304c) implemented by the signal control apparatus (300) further embodies an audiovisual hub device that is used to receive audiovisual contents generated by the multiple video recorders (315, 316); wherein the hub device broadcasts the signals generated by the one or more built-in sensors (311, 312) or the one or more external circuits (313) to the video recorders (315, 316) via the multiple wireless or wired connection ports (306a, 306b).

14. The scalable in-vehicle video system according to claim 13, wherein the audiovisual hub device implemented by the signal control apparatus (300) connects with a network router through the at least one communication port (305), so as to transmit the audiovisual contents generated by the multiple video recorders (315, 316) to the external system (317) in a live streaming process.

15. The scalable in-vehicle video system according to any of claim 9 to claim 14, wherein the signal control apparatus (300) further includes a control panel (120), and a user is allowed to operate the control panel (120) for remotely controlling any of the multiple video recorders (315, 316) to start or to stop recording the audiovisual content, and for previewing the audiovisual content.
